# EUROPEAN PATENT APPLICATION

(11) **EP 2 515 496 A1**
(43) Date of publication of application: **24.10.2012**
(21) Application number: 09852212.1
(22) Date of filing: 15.12.2009
(51) Int. Cl.: H04L 29/06, H04W 12/08, G06F 21/00

(54) **SYSTEM AND METHOD FOR GENERATING TRUST AMONG DATA NETWORK USERS**

(71) Applicant: Telefónica, S.A., 28013 Madrid (ES)
(72) Inventor: PLAZA FONSECA, Carlos, E-28043 Madrid (ES); AMAYA CALVO, Manuel, E-28043 Madrid (ES)
(74) Representative: Gonzalez-Alberto Rodriguez, Natalia
(86) International application number: PCT/ES2009/070587
(87) International publication number: WO 2011/073460

(57) **Abstract**

The invention relates to a system and a method in which a user (101) makes a service request (104) with a service provider (102) through a data network. The service provider (102) receives from trust generating equipment (103), located in an access provider, an assessment of the security level (106) of the user (101); said equipment (103) in turn receiving a delivery of information about the trust level (105) provided by said user (101); and in order for the aforementioned equipment (103) to collect information about the user identity, the network traffic generated by the user, the security status of the user device and the geographical location of the user device, this information being analyzed and summarized in a trust label which is sent to the service provider (102).

## Description

### Object of the Invention

As expressed in the title of this specification, the present invention relates to a system and a method for generating trust among data network users, such as the Internet, the essential purpose of which consists of a service provider determining an evaluation of the degree of trust that can be assigned to a user requesting the corresponding service of that provider, the service provider thus behaving like a trust authority; and such that the information about the degree of trust is more complete than that provided by the current techniques and less vulnerable to malicious manipulations; further preventing the user from having to use specific mechanisms for different service providers; greater use comfort and a greater security in the use of the services available thus being provided to data network users.

### Background of the Invention

The boom of Internet services implies an increase of the private and confidential information placed by individuals and companies in services providers. There is also a constant increase of the economic value of online transactions.

At the same time, the economic value and the distribution of the types of IT crimes is increasing. The new types of IT crimes include identity impersonation and stealing personal data for use in Internet frauds, such as stealing money from bank accounts and purchasing with stolen credit cards, or distributing unwanted mail or unwanted advertising to the contact list of the person involved, or crimes in the real world, such as obtaining personal information of a person for blackmailing him, stealing from his home,... As a result, it is necessary to have mechanisms that allow users to evaluate the trust level that can be placed in a client in any online transaction.

While security and trust in the real world are usually based and depend on the physical presence of the clients involved in any transaction at the same location, therefore the documents, the physical appearance or the signatures can be verified *in situ*, and from there the trust level of the clients can be established, but on the Internet there is no such possibility given that the clients communicate remotely from locations in any part of the world and they interact using computer devices and communication means that can be controlled by third parties.

For this reason, during electronic transactions information is compiled that can be used for evaluating the trust that can be placed in each client, protecting the information being used, preventing an illicit use of the information in that time or later. On one hand, the users accessing a service provider have different methods for evaluating the trust level of a service provider:
1. Using server certificates that can be signed by known certification authorities used over https servers (http security protocol).
2. Using filtered Web site services that maintain a blacklist of places where malicious code has been detected, which collect data for illicit purposes or which are known for some other damaging act against users.
3. Systems like those described in the following patents:
   (i) WO 2004/107647 "Mechanism for evaluating security risk" describing a system for evaluating the risk of downloading an application.
   (ii) GB 2422931 "Method and apparatus for real-time security verification of on-line services" describing a method so that the users evaluate the security level of a Web site before trusting it.
   (iii) US 2006/0212925. "Implementing trust policies" describing a system or method for assessing the trust that a user should place in the online entity with which he communicates using some information about the entity.

On the other hand, service providers also need to evaluate the trust level that can be placed in any user during electronic transactions, e.g., "Is he who he says he is?" "Is he using a secure device and communications channel, over which the confidential information is secure against an illicit use later on?". For this purpose, there are also several solutions providing useful information for assessing the trust level:
1. The use of user identification mechanisms based on several authentication factors, generally there are three factors used for verifying an identity of a person on the Internet: "Something I know" (a numeric or alphanumeric password, for example). "Something I have" (for example, a coordinates card, a digital certificate stored in hardware) and "Something I am" (a biometric characteristic like fingerprints, iris of the eyes, voice modulation, the face,...).
2. Solutions which attempt to prevent information theft in the client device using:
   - Firewalls: elements allowing the user to configure what connections to and from the Internet are allowed for his devices.
   - Anti-malware (malware detection systems): for testing and identifying a malicious code installed on user computers.
      The solutions can be bought and installed by the end user or they can be provided by a service provider when a user accesses the provider systems and attempts to manipulate the confidential information about the system, such as giving credentials for accessing an account of the user. In that case, the service provider providing the antimalware solution attempts to find a malicious code used for stealing information in the user computer. The service provider can then use this information about the existence or non-existence of malicious code for evaluating the trust that can be placed in the end user. The main anti-malware providers have solutions that could be used for this purpose ([1] [2] [3] [4]).
3. Solutions that provide some other information that can be used for assessing the trust level to a service provider.
   Thus, by using the IP address from which a user is connected, several suspicious situations can be detected:
   - The system can check if the IP address has been recently used in any fraudulent transaction or if it is part of a sub-network that has been used for such type of transactions.
   - The system can check if the address is from a physical geographical area which the user normally uses for connecting, and that there are no physical movements which are impossible, for example, someone is connected from Madrid and an hour later from Bangkok.
      The system can also check if a browser which the user is using has known security vulnerabilities. An example of such products is the RSA e-fraud Network, which is primarily used in financial entities [5].
      All of this information relating to electronic communication can be used with other information sources stored by the service provider, for example, when referring to online commerce, information about the products which the user has historically bought, value of those purchases,... or provided by third parties, solvency reports, previous on time payment violations,..., for making a risk evaluation.

There are several patents relating to processing information and detecting a risk situation:
- United States patent US7089592 "Systems and methods for detection and prevention of electronic fraud" describes a system for detecting fraud based on different mechanisms (neural networks, data mining, fuzzy logic...).
- United States patent US2007/0124579 "Method and system for online trust Management using statistical and probability modeling" describes a system for evaluating the trust and the reputation between companies that have not had previous interactions, using a system that compiles information from "trusted authorities" that can provide information about the economic situation, structure, history of previous contracts,... of the companies.

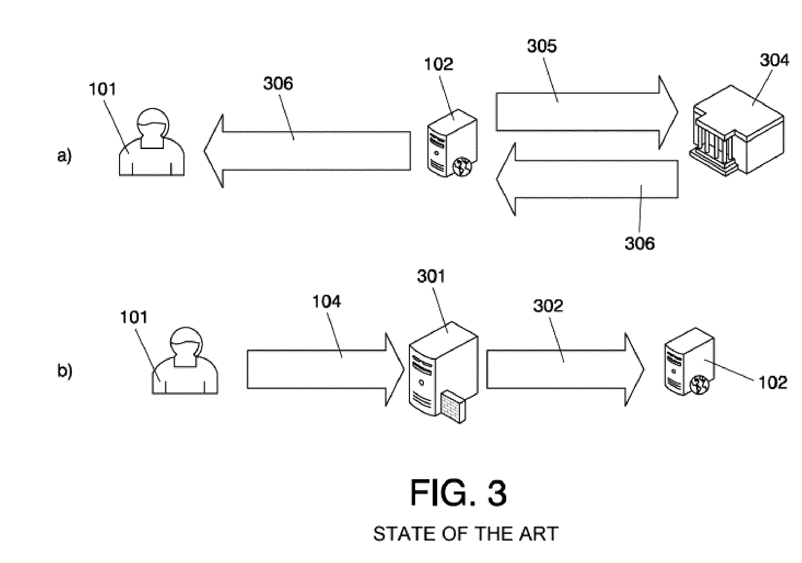

Figure 3 of this specification graphically depicts the current state of the art for establishing trust in a service provider.

Depending on the risk evaluation, a service provider can make several decisions: it can reject the user or request from him a different authentication (as described in United States Patent number 2005/0097320, which describes a system for switching in real time the authentication which a user needs to provide being based on the risk assigned to the transaction).

More specifically, in the upper part a) of Figure 3, it can be seen how, according to the state of the art, a service provider (102) can obtain an identity certificate. To that end, at a time prior to the start of the connection with the end user (101), the service provider (102) sends identity data (305) to the certification authority (304). The certification authority makes verifications about said data and generates a certificate (306) containing a subset of the aforementioned identity data (305). When the end user (101) wants to access a service supplied by the service provider (102), the latter will send the certificate (306) to the end user (101) so that the user can verify the identity of the service provider (102). The lower part b) of Figure 3 shows another possible scenario according to the current technology. In this scenario, the end user (101) accesses (104) the services of a service provider (102) through a content filtering server (301). The content filtering server can allow the connection (302) or deny it, depending on the security information available about the service provider (102). The problems occurring with the existing solutions are discussed below:

The trust evaluation of online transactions depends on the quality and quantity of available data.

Therefore, the service providers have to evaluate the trust level of the user attempting to access their services (it can be an electronic commerce site, a social network site, a financial service site or any type of service using or storing personal information). As a part of the trust determination process, a service provider has to respond to the questions: "Is the user who he says he is?" "Is he accessing our servers from a secure environment (location, device) from which the confidentiality and security of the transmitted data will be assured?" For that purpose, they use the information which they have available, relating to the electronic communications:
- Security of the device/equipment which the user is using for accessing the service. There are solutions based on anti-malware software which can inform of the existence of malware in a device/equipment. Generally speaking, a service provider is interested in the detection of password theft software; in this way anti-malware software could be provided to the user which would search the user device before granting access. However, this software could be deactivated and impersonated by malware that it is attempting to detect. If that occurs, the malware could continue sending information to the service provider which would grant access, incorrectly assuming that the user is accessing from a secure server.

The security of the browser, defining the browser as the software used by the users for accessing the servers of the service provider, is also analyzed given that there are known vulnerabilities in some obsolete versions of popular browsers which could be used by the malware for stealing or modifying the information that is being processed by the browser, such as passwords. Even though there is other software in the device, such as the operating system, that could also present exploitable vulnerabilities.

As a result, the service provider has a quantitative limitation (partial information about the vulnerabilities of the user device) and a qualitative limitation (it is possible that the information that is being received is being provided by a malicious program impersonating the anti-malware solution deployed by the service provider) in the analysis of the security status of the user device.
- Location of the user: Using the IP address of the user device as input, a service provider can know the physical location of the user. A service provider can thus compare that location with prior known locations of the user or if the interval of IP addresses (network or sub-network) is included in a high risk interval (interval of IPs known for prior fraudulent activity). It can also be determined if there has been an impossible change of location in a short time span (for example, two successive connections to a service by the same user in a 30-minute interval from locations 3000 kilometers apart).

The service providers can also analyze if the location is dangerous due to the lack of security measures of the environment, for example, if it is being done from a public Wi-Fi access point without authentication and with a weak encryption system, such as the Wired Equivalent Privacy (WEP) which was broken years ago.

This solution has also quantitative and qualitative problems: it can be falsified (modifying the information sent over low-level protocols for providing a false IP) and, for the location change detection mechanisms, they are restricted to a single service provider or set of service providers sharing that information.
- Behavior of the user: The analysis of the behavior of the user, day or time at which a service is normally used, locations from which the user normally access the network (using the system described above), service use patterns,..., is another source of information that a service provider can use for evaluating the trust level of a user.

In this case, a service provider can only collect the use information about its own services when a global pattern analysis concerning the uses of the user in all the services in the network would be much more useful for detecting cases of identity theft.
- User authentication: a service provider can use several authentication mechanisms, "something I known", "something I have", "something I am", for identifying any user who is attempting to access to the system. The more authentication mechanisms being concurrently used, the higher the trust level will be for the authenticated user.

However, given that each service provider can use and uses its own authentication systems, users must remember several passwords for the "something I know" mechanism and use different devices (cards, card readers, biometric certificate readers) for the other factors. In summary, the use of the information in electronic communications by service providers with the current techniques has the problem of using partial information which can be manipulated by malicious attackers. Current systems also require the user to use specific mechanisms for each service provider (authentication mechanisms, anti-malware software). This could damage the enjoyment of the user of these services if he usually accesses several service providers.

A list of the abbreviations used in the present specification as well as the references between brackets of the present section are provided below.

### Abbreviations:

- ADSL: Asymmetric Digital Subscriber Line
- IP: Internet Protocol
- NAC: Network Access Control
- SAML: Security Assertion Markup Language
- SIM: Subscriber Identity Module
- WEP: Wireless Equivalent Privacy

### References between brackets:

[1] Panda Software
[2] McAfee
[3] Karpersky Labs
[4] Trend Micro http://es.trendmicro.com
[5] RSA e-fraud network http://www.rsa.com/node.aspx?id=3071

### Description of the Invention

To achieve the objectives and avoid the drawbacks indicated in the preceding sections, the invention consists of a system and a method for generating trust among data network users, where a user makes a service request with a service provider through a data network such as the Internet.

In a novel manner, according to the invention, the system is characterized in that the service provider receives from trust generating equipment, located in an access provider to access that data network, an assessment of the security level of the user; said equipment in turn receiving a delivery of information about trust level provided by that user; such that the aforementioned equipment collects information relating to the user about at least the following four fields:
- The user identity.
- The network traffic generated by the user for the analysis of his behavior.
- The security status of the user device, and
- The geographical location of the user device;
all this information being analyzed and summarized in a trust label which will be sent in the aforementioned assessment to the service provider.

According to a preferred embodiment of the invention, the system thereof presents the aforementioned trust generating equipment structured in a trust measurement device, an identity management subsystem and a network access control subsystem; while the user device is a personal computer or analogous device; the system establishing, at least in said devices and subsystems, a plurality of functional modules communicated by means of a plurality of data flows.

According to the preferred embodiment of the invention, the mentioned plurality of modules consists of:
- A PC status collection module located in the user computer or analogous user device which collects information about the security status of the PC, such as firewall status, antivirus status, remaining component status defined in the policy that is established or the like; this module being able to be integrated directly on the chosen antivirus/firewall solution if this solution has any type of mechanism of informing about the status of the PC; this module also being able to be implemented by means of dedicated software.
- A PC network access authorization module located in the user computer or analogous user device, consisting of a component requesting permission from the data network for accessing it; such that as part of the request it will pass the security status of the PC (as it is reported by means of the PC status collection module) on to the network such that the network can verify if the PC complies with the security policies and act accordingly (giving complete access, restricted access or completely denying access to the PC, depending on what the followed policy states).
- A location service module consisting of an external component of the system providing said system with the information about the geographical location of the user device for a given user at a given time; such that the location is then made anonymous and included in a historical behavior database as part of a starting line of the behavior of the user.
- A network status collection module which is located in the trust measurement device and collects statistical data of the use of the network for a given user, such that the starting line of the behavior of the user can be modeled so that the system can detect alterations of this starting line and act on them.
- A historical behavior database module which is located in the trust measurement device and stores the statistical data of the use of the network made anonymous, such that said data will define the starting line of the behavior for the users.
- A behavior correlating module which is located in that trust measurement device and will correlate/integrate all the components of the behavior for the users such that a starting line of the behavior can be established, allowing the detection of deviations from that starting line; further enabling the system to detect aberrant behaviors (such as, for example, the generation of SPAM or junk mail) which could indicate problems in the user devices.
- A status collection module belonging to the trust measurement device which clusters the information about the status of the user device such that it can be requested when the system needs to generate an evaluation of the risk level, thus providing an indicator of the trust level.
- A trust label generating module also belonging to the trust measurement device which is an interface with all the external client systems or service providers and will calculate a single numerical value from all the security information of a given user (the aforementioned four fields of identity, location, security status and behavior); such that the numerical value calculated will be used to give an idea of the risk level of the user (or security level, or trust level); this trust level then being able to be passed on to third parties if the user allows it.
- A user/profile management module which is located in the aforementioned identity management subsystem and allows the end users to manage their profile in the system, such that it enables a single residential client to manage a user list associated with its subscriber line, and for each of them, it can manage their identities (in different identity providers) to be spread.
- A service user module located in the identity management subsystem, consisting of a repository of the information of the users for the service (profiles, identities, security configuration, or the like).
- An authenticating module located in said identity management subsystem consisting of a module which will validate the user identity according to the authentication mechanism defined for them (user/password, digital certificate, biometric certificate, or the like).
- An external digital identity provider module which is located in that identity management subsystem and consists of an external digital identity provider module with which the system will have an interface for spreading the user identities.
- A network access approval module which is located in the network access control subsystem, being a module which will validate the network access requests from the user devices, granting different access levels (unrestricted access, restricted access or denied access) using the security policy of the network, user preferences and the security status itself of the device as input for the decision, and
- A policy server module belonging to the network access control subsystem, which will be used by the managers or administrator of the system for defining the global security policies for granting network access.

In addition, the invention provides a method for generating trust among data network users, where a user makes a service request with a service provider through a data network such as the Internet.

In a novel manner, according to the invention, in the method of the invention the sequence of operations for a user attempting to access any service, from the time he attempts to access the network, is as follows:
- When the user attempts to access the network, a PC network access authorization module requests credentials and collects information about the current security status of the user device;
- next, the aforementioned PC network access authorization module will pass on information about the security status and the credentials of the user to a network access approval module which will check the credentials and will check if the security status of the device complies with a policy obtained from a policy server module;
- then, the aforementioned network access approval module passes the security and identity information on to a network status collection module, which also grants network access to the user device;
- while the user is browsing on the network, that network status collection module gradually creates a statistical behavioral analysis of the user browsing habits, which will be stored in a historical behavior database, data about the location of the user device obtained from an external location service module further being included in this information;
- in simultaneity with the preceding point, a PC status collection module keeps a module consisting of another status collector informed of any security change in the user device;
- when the user accesses a service hosted in a service provider, said service provider requests a trust label/security evaluation of the user with a trust label generating module, said module in turn requesting the current security status of the client device from the status collection module and will request information about the current behavior of the user in this browsing session compared with the history from a behavior correlating module; and
- the aforementioned trust label generating module then calculates an integrated value for the security status/trust level of the user taking into account all the fields of collected information, such as identity, location, behavior and security status of the device, and will pass this value on to the service provider.

Though there may be variations, the modules mentioned in this method of the invention are generally those described in detail in the system of the invention.

With the structure that has been described, the system and method of the invention have the following main advantages:

The system defined will provide the service providers with the trust level that they can assign to a given user, which is more complete and has higher quality than that which they are currently using, given that the trust level will be based on information collected directly in the network access provider that the user is using for connecting to the service providers.

This information is more difficult for malicious third parties to handle than the information that the service providers are currently using. The IP address used as part of the analysis is thus assigned by means of the network access provider and cannot be manipulated as may occur if the service provider was obtaining the IP from the user device.

For mobile communications, the network access provider also has information about location that it can obtain from its network access elements (base stations for mobile telephones, Wi-fi access points). The access provider also keeps information about the user identity and authentication, such as the information associated with the SIM cards used in mobile telephones and also about wireless access and fixed access devices.

The information about behavior is also more complete and up to date given that all the network traffic of the given user passing through the network access provider can be captured and analyzed. The system can thus obtain a complete picture of the behavior, unlike the capture of traffic in the service provider which would give only partial information.

The information collected from the user device is protected with mechanisms assuring its integrity (assuring that it has not been manipulated).

The analysis of the collected information is complemented with information from external sources, such as collaborative security systems (in which several access providers could exchange security information about local threats) and information about the detection of threats by public organizations.

The end users only need to have a single module (provided by the network access provider) for collecting their security status of the device, instead of having to trust a different solution for each service provider having its own security and trust solution implemented.

To aid in better understanding this specification and as an integral part thereof, several drawings are attached below in which the object of the invention has been depicted with an illustrative and non-limiting character.

### Brief Description of the Drawings

Figure 1 schematically depicts, by means of a functional block diagram and generically, a system and method for generating trust among data network users, carried out according to the present invention.
Figure 2 schematically depicts, by means of a functional block diagram and in more detail, the system and method for generating trust among data network users of the previous Figure 1, all the modules and data flows provided for in the preferred embodiment of the invention being included.
Figure 3 schematically depicts by means of functional block diagrams two scenarios according to systems for generating trust known in the current state of the art.

### Description of an Embodiment of the Invention

A description of an example of the invention will be made below referring to the references of the drawings.

As indicated in the "Background of the Invention" section, Figure 3 depicts those scenarios a) and b) of the state of the art therein explained.

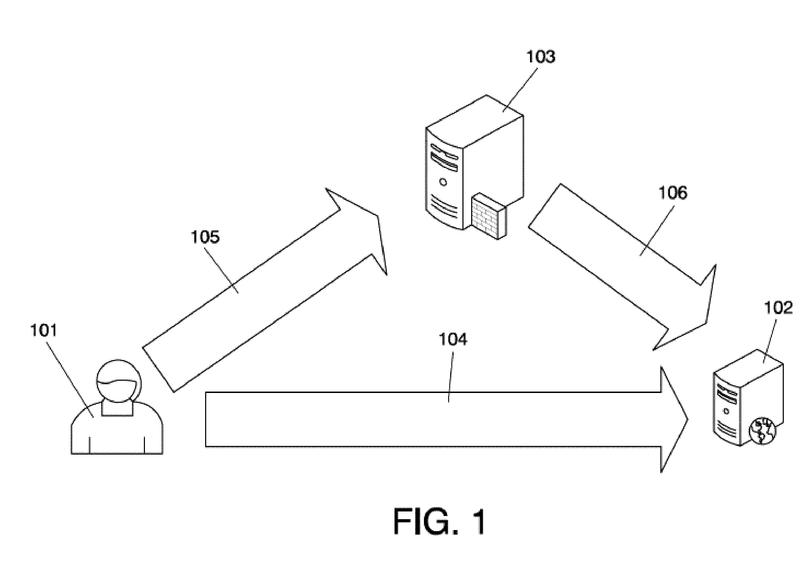

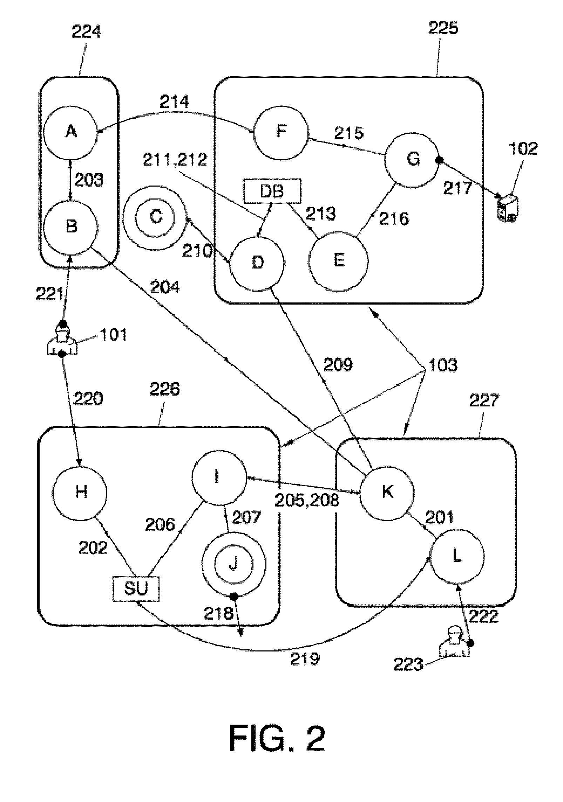

The method and system of the present example of the invention are depicted in the remaining Figures 1 and 2, where respective generic and detailed block diagrams, respectively, are shown.

Therefore, in Figure 1 and according to the system of the present example, it can be seen that a user 101 makes a service request 104 with a service provider 102 through a data network such as the Internet. The access provider giving information about the security of the user has trust generating equipment 103 from which it receives an assessment of the trust level 106 of the user 101, this equipment 103 in turn receiving a delivery of information about security level 105 provided by that user 101; that equipment 103 being located in the access provider for that network which the aforementioned user 101 is using, and such that the aforementioned equipment 103 collects information relating to the user 101 regarding at least the following four fields: user identity, network traffic generated by the user for analysis of his behavior, security status of the user device, and geographical location of the user device; all this information being analyzed and summarized in a "trust pass" which is sent in the aforementioned assessment 106 to the service provider 102, as illustrated in Figure 1.

As can be seen in Figure 2, in the system of the present example the trust generating equipment 103 is structured in a trust measurement device 225, an identity management subsystem 226 and a network access control subsystem 227, while the user device is a personal computer or analogous device 224.

According to the system of the present example of the invention, in at least those devices and subsystems a plurality of functional modules A to L, DB and SU communicated by means of a plurality of data flows 201 to 222, are established. Before describing said modules and data flows in detail, a general description of the system of the present example will be provided.

A trust measurement device installed in an internet access provider network is established by means of the system of the present example. Said device includes modules which directly interact with several systems of the provider, thereby preventing external manipulation of the security data being processed. Specifically, the system interacts with systems such as:
- Access provider system (external digital identity provider). This is a system providing information about the user authentication level.
- Geolocation system, which will provide the geographic coordinates for the location of the user equipment. Depending on the type of access, it could be an address of the site if the user is accessing through a land line, the coordinates of a wireless access point, or the geographic coordinates from triangulation in a mobile network.
- Traffic collecting system, which will collect the traffic generated by the user using network probes.

All this information is stored in a storage system in the trust measurement device, such that personal information such as that of the network traffic generated by the user, is stored in a form that allows forward chaining, but not backward chaining. In other words, given any known address the system will be able to know if that address has been visited before by the user, but the system will not be able to list the addresses that any user has visited. For said purpose, digital fingerprint functions are used on the collected data.

The system also collects information about the device/equipment used by any user for accessing the network. This collection includes mechanisms for assuring the integrity of the data (preventing the manipulation of the data by malicious parties). The system will therefore collect information for evaluating the security level of the user equipment (security status of the programs being executed in the device, the analysis of known vulnerabilities, the activity of suspect or malicious programs and the protection of the equipment with anti-malware programs).

For the purpose of preventing information manipulation problems, such as for example a malicious program impersonating a data collection agent of the system, the information is collected by means of a module provided by the network. That module is provided by means of the internal network of the access provider and uses encrypting and digital signature techniques for assuring the integrity of the data.

An expert system within the trust measurement device analyzes all the collected information, such that all the information just described is available as input and information corresponding to inputs from other systems, such as collaborative security systems (whereby several access providers can exchange security information about local threats) and information about the detection of threats by public organizations, can also be included.

The aforementioned expert system calculates a numerical value for the trust level that can be deposited in a user based on the identity, equipment status, location and information about behavior; assigning a trust value for each of the four sets of information and a global trust level based on all the sets.

Finally, the trust measurement device passes that information about the trust level on to the service providers which will thus have a service for consulting the trust level about any user accessing its services.

All the modules and data flows shown in Figure 2 are described below.

### Module A:

This is a PC status collection module which collects the security status of the PC (firewall status, antivirus status, remaining component status defined in the policy). It is a module that can be integrated directly on the antivirus/firewall solution if the chosen solution has any type of mechanism of informing about the status or can be implemented by means of dedicated software.

### Module B:

This is a PC network access authorization module which is a component that will request permission from the network for accessing it. As part of the request it will pass the security status of the PC (as it is reported by means of module A) on to the network such that the network can verify if the PC complies with the security policies and act accordingly (giving complete access, restricted access or completely denying access to the PC, depending on what the policy states).

### Module C:

This is a location service module consisting of an external component that will provide the system with the information about the geographical location for a given user at a given time. The location will then be made anonymous and included in the historical behavior database DB as part of the starting line of the behavior.

### Module D:

This consists of a network status collection module that will collect statistical data of the use of the network for a given user, such that the starting line of the behavior of the user can be modeled. The system can thus detect alterations of this starting line and act on them.

### Module DB:

This is a historical behavior database module, such that this database stores the statistical data of the use of the network made anonymous, which will define the starting line of the behavior for the users.

### Module E:

This is a behavior correlating module that will correlate/integrate all the components of the behavior for the users such that a starting line of the behavior can be established and the detection of deviations from that starting line is allowed. This will also allow the system to detect aberrant behaviors (such as, for example, the generation of SPAM) which could indicate problems in the user devices.

### Module F:

This is a status collection module which clusters the information about the status of the user device such that it can be requested when the system needs to generate an evaluation of the risk level (indicator of the trust level).

### Module G:

This consists of a trust pass or label generating module, which is the interface with all the external client systems (service providers), and will calculate a single numerical value from all the security information of a given user (the aforementioned four fields of identity, location, security status and behavior); such that the numerical value calculated will be used to give an idea of the risk level of the user (or security level or trust level). This trust level can then be passed on to third parties if the user allows it.

### Module H:

This is a user/profile management module which allows the end users to manage their profile in the system. This module will allow a single residential client to manage a user list associated with its subscriber line and, for each of them, it can manage their identities (in different identity providers) to be spread.

### Module SU:

This is a service user module consisting of a repository of the information of the users for the service (profiles, identities, security configuration, or the like).

### Module I:

This is an authenticating module which will validate the user identity according to the authentication mechanism defined for them (user/password, digital certificate, biometric certificate, etc).

### Module J:

This is an external digital identity provider module with which the system will have an interface for spreading the user identities.

### Module K:

This consists of a network access approval module which will validate the network access requests from the user devices. It will grant different access levels (unrestricted access, restricted access or denied access) using the security policy of the network, user preferences and the security status itself of the device as input for the decision.

### Module L:

This final module of the system consists of a policy server module which is used by the managers or administrator 223 of the system for defining the global security policies for granting network access.

A description of data flows 201 to 222 which are established between the preceding modules, as depicted in Figure 2, will be described below.

### Flow 201:

The module L will pass the configuration data such as those defined by the administrator 223 on to module K, such that module K can use them next in network access requests of client devices.

### Flow 202:

By using this data flow, module H will store the user preferences in the user database of the SU service.

### Flow 203:

Module B will request from module A information relating to the security status of the user device 224. It is important to observe that even though the specific information included in the security status check can be personalized, the change of the defined parameters (including any new type of software for supervision, for example) will require updating module A deployed in the client devices.

### Flow 204:

Module B will pass on the information collected about the end user (credentials) from module A (status of the device) to module K.

### Flow 205:

Module K will pass the received data relating to the identity (credentials of module B) on to module I.

### Flow 206:

Module I will read from the user database of the SU service the user identity data stored such that it can verify if the information received from module K is correct. It will also read the user preferences.

### Flow 207:

If the authentication is correct (the data received from module K fit the data stored in the user database of the SU service), module I will spread the user identities to the external digital identity provider systems.

### Flow 208:

If the authentication is correct (the data received from module K fit the data stored in the user database of the SU service), module I will pass the user preferences on to module K. By using the user identity and preferences, module K can then apply the network filters which fit the security status of the device. It is important to note that the filters do not depend only on the security status of the device, but, for a device single (and to that end a single security status), different filters can also be applied depending on what user is currently using the device.

### Flow 209:

Once the user has been authorized for accessing the network, module K will pass the user identity and the initial security status of the device on to module D. This will launch the statistical network traffic capture for that user.

### Flow 210:

Module D will request information relating to the current geographical location of the user from module C.

### Flow 211:

Module D will read the information from the historical behavior database about the previous behaviors of the user (starting line). The starting line will be updated with the current network traffic.

### Flow 212:

Periodically, while the user is connected, module D will update the historical behavior database DB with the current information in relation to the behavior of the user in the network. The information stored is statistical and made anonymous, such that no chaining can be made about the traffic from only the stored data.

### Flow 213:

Module E will access the historical behavior database DB for obtaining information about updated behavior (starting line and current behavior) for the users who are connected at a given time.

### Flow 214:

Module A will periodically inform module F of the changes in the security status of the device. Module F will have current, updated information about the security status of all the devices connected at a given time.

### Flow 215:

Module F will pass the information about the current security status of any device (for any user) on to module G. The information could be passed on in raw or processed form (as an indicator instead of giving all the details).

### Flow 216:

Module E will pass the processed information about the behavior of the user on to module G. The information could be passed on in raw or processed form (as an indicator instead of giving all the details).

### Flow 217:

Module G, with the data obtained from module E and module F (flows 215 and 216), will calculate from that information a single numerical indicator of the risk level (or trust level) for any user at any given time. Cryptographic information (such as a digital signature) will then be added to the indicator in order to prevent falsification and repetition. Information that will identify the user without passing on his identity (made anonymous) will also be added, then the calculated, processed indicator will be passed on to the interested parties. This processed, signed information made anonymous will be referred to as "a pass", or trust label. Passes can be generated by means of an express petition from a user (and be sent directly to the user device such that he can pass them on to wherever needed) or they can be generated by means of a request from third parties (service provider). In this latter case, the third party must have been previously authorized by the user for receiving the data.

### Flow 218:

Module J will spread the user identities to the authorized systems using this flow.

### Flow 219:

Module L will store all the information defining the security policies in the user database of the service.

### Flow 220:

This is a personalization profile flow, where the end user can define, using the graphic interface offered by module H, the preferences of the service. For example, it can define a user list associated with its ADSL line and, for each user, it can define the network access level for each security level defined by the policy of the network. Flow 221:

This is a credential flow where the end user will provide module B with his credentials when they are requested. The credentials can be user/password, digital certificate, biometric credentials, etc.

### Flow 222:

This final data flow consists of a configuration of the service where the administrator 223 can define the network access policy in the system using this flow 222.

### In addition, the present example of the invention shows a method according to said invention using the structure of modules and data flows described above, such that the steps of said method for a user attempting to access any service from the time he attempts to access the data network is established in the following seven points:

One: When the user attempts to access the network, module B will request the credentials. By using flow 203, module B will collect information about the current security status of the user device 224.

Two: By using flow 204, module B will pass information about the security status and the credentials of the user on to module K. Module K will check the credentials using flow 205 and flow 208 and will check if the security status of the device complies with the policy, which it will obtain from module L using flow 201.

Three: Module K will then pass the security information and identity on to module D using flow 209. It will thereby also grant network access to the user device.

Four: While the user is browsing on the network, module D will create a statistical behavioral analysis of the user browsing habits which are stored in module DB. This information will also include information about the location, which will be obtained from external module C using flow 210.

Five: Using flow 214, module A, on the other hand, will keep module F informed of any security change in the user device 224.

Six: When the user wishes to access a service hosted in the service provider 102, said service provider 102 will request a trust label/security evaluation of the user from module G. This module G will interrogate module F using flow 215 about the current security status of the user device and will ask module E about the current behavior of this browsing session compared with the history, using flow 216. And

Seven: Module G will then calculate an integrated value for the security status/trust level of the user taking into account all the dimensions or fields of information (identity, location, behavior, security status of the device) and will pass this value on to the service provider 102 using flow 217.

## Claims

1. A system for generating trust among data network users wherein a user (101) makes a service request (104) with a service provider (102) through a data network such as the Internet; **characterized in that** the service provider (102) receives from trust generating equipment (103), located in an access provider to access that data network, an assessment of the security level (106) of the user (101); said equipment (103) in turn receiving a delivery of information about the trust level (105) provided by that user (101); such that the aforementioned equipment (103) collects information related to the user (101) regarding at least the following four fields:
- the user identity,
- the network traffic generated by the user, for the analysis of the behavior thereof,
- the security status of the user device (224), and
- the geographical location of the user device (224);
all this information being analyzed and summarized in a trust label which will be sent in the aforementioned assessment (106) to the service provider (102).

2. The system for generating trust among data network users according to claim 1, **characterized in that** the trust generating equipment (103) is structured in a trust measurement device (225), an identity management subsystem (226) and a network access control subsystem (227); while the user device is a personal computer or an analogous device (224); the system establishing, at least in said devices and subsystems, a plurality of functional modules (A to L, DB, SU) communicated by means of a plurality of data flows (201 to 222).

3. The system for generating trust among data network users according to claim 2, **characterized in that** said plurality of modules consists of:
- a PC status collection module (A) located in the user computer or analogous user device (224) which collects information about the security status of the PC, such as firewall status, antivirus status, remaining component status defined in the policy that is established or others; this module (A) being able to be integrated directly on the chosen antivirus/firewall solution if this solution has any type of mechanism for informing about the status of the PC; this module (A) also being able to be implemented by means of dedicated software;
- a PC network access authorization module (B) located in the user computer or analogous user device (224), consisting of a component requesting permission from the data network for accessing it; such that as part of the request it will pass the security status of the PC (as it is reported by means of the PC status collection module. (A)) on to the network such that the network can verify if the PC complies with the security policies and act accordingly (giving complete access, restricted access or completely denying access to the PC, depending on what the policy states);
- a location service module (C) consisting of an external component of the system providing the system with the information about the geographical location of the user device (224) for a specific user at a given time; such that the location is then made anonymous and included in a historical behavior database (DB) as part of a starting line of the behavior of the user (101);
- a network status collection module (D) which is located in the trust measurement device (225) and collects statistical data of the use of the network for a given user, such that the starting line of the behavior of the user can be modeled so that the system can detect alterations from this starting line and act on them;
- a historical behavior database module (DB) which is located in the trust measurement device (225) and stores the statistical data of the use of the network made anonymous, such that said data will define the starting line of the behavior for the users;
- a behavior correlating module (E) which is located **in that** trust measurement device (225) and will correlate/integrate all the components of the behavior for the users such that a starting line of the behavior can be established, allowing the detection of deviations from that starting line; further enabling the system to detect aberrant behaviors (such as, for example, the generation of SPAM or junk mail) which could indicate problems in the user devices;
- a status collection module (F) belonging to the trust measurement device (225) which clusters the status information of the user device (224) such that it can be requested when the system needs to generate an evaluation of the risk level, thus providing an indicator of the trust level;
- a trust label generating module (G) also belonging to the trust measurement device (225), which is an interface with all the external client systems or service providers (102) and will calculate a single numerical value from all the security information of a given user (the aforementioned four fields of identity, location, security status and behavior); such that the numerical value calculated will be used to give an idea of the risk level of the user (or security level, or trust level); this trust level then being able to be passed on to third parties if the user (101) allows it;
- a user/profile management module (H) which is located in the identity management subsystem (226) and allows the end users to manage their profile in the system; such that it allows a single residential client to manage a user list associated with its subscriber line and, for each of them, it can manage their identities (in different identity providers) to be spread;
- a service user module (SU) located in the identity management subsystem (226), consisting of a repository of the information of the users for the service (profiles, identities, security configuration, or the like);
- an authenticating module (I) located in said identity management subsystem (226) consisting of a module which will validate the user identity according to the authentication mechanism defined for them (user/password, digital certificate, biometric certificate, or the like);
- an external digital identity provider module (J) which is located **in that** identity management subsystem (226) and consists of an external digital identity provider module with which the system will have an interface for spreading the user identities;
- a network access approval module (K) which is located in the network access control subsystem (227), being a module which will validate the network access requests from the user devices, granting different access levels (unrestricted access, restricted access or denied access) using, the security policy of the network, user preferences and the security status itself of the device as input for the decision; and
- a policy server module (L) belonging to the network access control subsystem (227), which will be used by the managers or administrator (223) of the system for defining the global security policies for granting network access.

4. A method for generating trust among data network users, wherein a user (101) makes a service request (104) with a service provider (102) through a data network such as the Internet; **characterized in that** the sequence of operations for a user (101) attempting to access any service from the time he attempts to access the network is as follows:
- when the user (101) attempts to access the network, a PC network access authorization module (B) will request credentials and will collect information about the current security status of the user device;
- said PC network access authorization module will pass on information about the security status and the credentials of the user to a network access approval module (K) which will check the credentials and will check if the security status of the device complies with a policy obtained from a policy server module (L);
- the network access approval module (K) will then pass the security information and identity on to a network status collection module (D), which also grants network access to the user device;
- while the user is browsing on the network, that network status collection module will create a statistical behavioral analysis of the user browsing habits, which will be stored in a historical behavior database (DB), data about the location of the user device obtained from an external location service module (C) further being included in this information;
- in simultaneity with the preceding point, a PC status collection module (A) keeps another status collection module (F) informed of any security change in the user device;
- when the user (101) accesses a service hosted in a service provider (102), said service provider requests a trust label/security evaluation of the user from a trust label generating module (G), said module (G) in turn requesting the current security status of the client device from the status collection module (F) and it will request information about the current behavior of the user in this browsing session compared with the history from a behavior correlating module (E); and
the aforementioned trust label generating module (G) then calculates an integrated value for the security status/trust level of the user taking into account all the fields of collected information, such as identity, location, behavior and security status of the device, and will pass this value on to the service provider (102).
